# EUROPEAN PATENT SPECIFICATION

(11) **EP 2 285 240 B1**
(45) Date of publication and mention of the grant of the patent: **09.01.2013**
(21) Application number: 09765645.8
(22) Date of filing: 19.06.2009
(51) Int. Cl.: A23L 1/29, A23L 1/304, A23L 1/302, A23L 1/303, A23L 1/305, A23L 1/308, A61K 35/20

(54) **NUTRITIONAL COMPOSITION FOR BARIATRIC SURGERY PATIENTS**
NÄHRSTOFFZUSAMMENSETZUNG FÜR ADIPOSITASCHIRURGIEPATIENTEN
COMPOSITION NUTRITIONNELLE POUR PATIENTS DE CHIRURGIE BARIATRIQUE

(30) Priority: 19.06.2008 WO PCT/EP2008/004943
(43) Date of publication of application: 23.02.2011
(73) Proprietor: N.V. Nutricia, 2712 HM Zoetermeer (NL)
(72) Inventor: LANGFORD, Jane Elizabeth, NL-6700 CA Wageningen (NL); TAKURUKURA, Faith Farayi, NL-6700 CA Wageningen (NL); PATTERSON, Catherine Louise, NL-6700 CA Wageningen (NL); GIFFEN, Sandra Helen, NL-6700 CA Wageningen (NL); BRODY, Frederick, Joel, Washington, DC 20037 (US)
(74) Representative: Atkinson, Peter Birch
(86) International application number: PCT/EP2009/004469
(87) International publication number: WO 2009/153065

(56) References cited:
- WO-A-00/21391
- WO-A-99/53777
- WO-A-02/052954
- WO-A-2004/017764
- US-A1- 2008 107 715
- POITOU ET AL.: "carences nutritionnelles après bypass gastrique, diagnostic, prevention et traitement" CAHIERS DE NUTRITION ET DE DIETETIQUE, vol. 42, no. 3, June 2007 (2007-06), pages 153-165, XP008102601

## Description

### Field of the invention

The invention relates to nutritional compositions particularly suitable for use by morbidly obese patients pre and post bariatric surgery. The product helps decrease liver size when used in patients following a calorie restricted diet in the period preceding bariatric surgery and further helps to maintain bone health and optimal nutritional requirements in the post bariatric surgery patients.

The composition comprises protein, digestible carbohydrate, dietary fibers, specific micronutrients and preferably no or very low amounts of fat.

### Background of the invention

The rate of increase in obesity in the Western world is a major health problem affecting millions of people. Bariatric surgical procedures including gastric bypass represent a successful way to achieve significant weight reduction in morbidly obese individuals. Following surgery it is estimated that up to one-third of the patients suffer nutritional deficiencies that cannot be corrected by normal diet alone.

From the literature, it is evident that nutritional deficiencies are common in both pre and post bariatric surgery patients. These deficiencies are specific depending on the type of surgery performed and post-operative deficiencies are further exacerbated. In the USA the most common surgery is the Roux-en-Y gastric bypass (RYGBP) at 65.1%, followed by adjustable gastric band (AGB) at 24%, vertical banded gastroplasty (VBG) at 5.4% and Bilio-pancreatic diversion (BPD) at 4.9% [1].

VBG and AGB are purely restrictive, resulting in a 30-50ml gastric pouch. Normal absorption is still possible, but deficiencies occur as a result of the greatly reduced overall volume of food intake. RYGBP is predominantly restrictive but also results in some malabsorption. The stomach pouch is decreased to 20-30ml and the duodenum is completely bypassed in the surgery. In addition, a short segment of the jejunum may also be bypassed, resulting in mild fat and protein malabsorption. The BPD is a primarily malabsorptive procedure with some restriction [2;3].

Large liver size impedes laparoscopic surgery in this patient group. An intense pre-surgery weight loss programme (4-6weeks) has been found to significantly reduce liver size. Currently available weight loss products are not designed to address specific micronutrient needs of this patient group without additional multivitamin supplementation as they only contain micronutrients up to RDA levels. To meet RDAs for micronutrients, up to 5 servings of a protein containing weight management formula may need to be consumed in addition to multivitamins taken several times a day. The need to take several supplements each day can lead to reduced compliance over time resulting in clinical deficiencies.

Protein malnutrition is a real risk in bariatric surgery patients. Many patients require protein supplementation during the early phases of rapid weight loss, to prevent excessive loss of muscle mass. The advantage of a protein containing, low calorie product specifically designed to meet or exceed micro-nutrient requirements, for use in patients pre and post bariatric surgery, is that patients can learn to combine healthy eating and product use without total reliance on meal replacers even before the surgical procedure is performed.

WO 99/53777 A discloses a nutritional composition for pregnant and lactating women. The composition comprises proteins (1 mg - 550 g), carbohydrates (20 - 70 g), dietary fibres (1 mg - 30 g), polyunsaturated fatty acids (5 g), vitamin B12 (0.01 mcg - 8 mcg), vitamin D3, calcium (calcium phosphate 0.1 mg - 3.6 g) and iron (0.01 mg - 90 mg).

WO 2004/017764 A discloses meal replacers comprising proteins (30 - 45 g), dietary fibres (7-12%), carbohydrates, fat, vitamin B12 (cyancobalamine), vitamin D3, iron, phosphorous and calcium. The compositions are used to maintain glycemic control, for inducing satiety and for improving GI function.

POITOU E TAL.: "Carences Nutritionnelles Après Bypass Gastrique, Diagnostic, Prevention et Traitement" CAHIERS DE NUTRITION ET DE DIETETIQUE, vol. 42, no. 3, June 2007 (2007-06), pages 153-165, XP008102601 discloses further nutritional compositions for pre- and post-bariatric surgery patients.

### Summary of the invention

The objective of the invention is therefore to prepare a balanced nutritional product that addresses the specific nutritional needs of gastric bypass patients. To this end, the present invention provides a composition comprising 20-60 wt% protein source, 15 -55wt% low glycemic carbohydrate, 10-20 wt% soluble dietary fibres, less than 10 wt% fat and micronutrients, wherein the micronutrients comprise
0.75-3 wt% calcium ,
0.5-1.5 wt% phosphorous,
12.5-100 mg/100g of iron,
10-100 mcg/100g vitamin D,and
175-500 mcg/100g vitamin B12
the wt% being based on the dry weight of the total composition.

The unit "mcg" represents micrograms.

Compositions according to the invention are specifically designed for use in obese gastric bypass patients for inducing liver size reduction when used pre-operatively, prevention and/or treatment of bone calcium depletion and osteopenia, prevention and treatment of post-operative nutritional deficiencies, improving GI function or bowel health, induction of weight loss pre and post surgery, inducing satiety, preventing dumping syndrome or for maintaining glycaemic control. The product is therefore designed for both pre and post operative bariatric surgery patients, to be taken as part of a prescribed diet plan

The composition according to the invention includes protein and a specially designed blend of vitamins and minerals. The product will meet or exceed RDAs for all vitamins, trace elements, magnesium and phosphorus and will be low in calories and volume.

Preferred features of the invention are set out below as (i)-(vi).
(i) The protein source is a low lactose or lactose free protein source (preferably whey based and even more preferably in hydrolysed form) present in the composition in an amount of 20-60 g/100g of the composition (i.e. 20-60 wt%), more preferably 20-40 g/100g of the composition (i.e. 20-40 wt%).
(ii) The carbohydrate (which is present in an amount of 15-55 wt%) is a low glycemic carbohydrate, e.g. selected from fructose, galactose, isomaltulose and slow digestible starch.
(iii) The soluble dietary fibres, which are present in the composition in an amount of 10 - 20 wt% are preferably inulin and/or oligo fructose.
(iv) Fat present in the composition is a blend of hybrid safflower oil, canola oil and coconut oil which provide an optimal ratio of linoleic to α-linolenic acid.
(v) The iron (present in an amount of 12.5 -100 g of composition) is preferably fat coated.
(vi) The ratio of calcium to phosphorus (i.e. the Ca:P ratio) is 1.4.

A composition in accordance with the invention comprises all of features (i)-(vi).

### Detailed description of the invention

The product according to the invention is intended to be used to support liver size reduction when used pre-operatively, maintain nutritional biomarkers of bone health (PTH; parathyroid hormone) following surgery, (n.b. PTH concentrations are increased in post-operative gastric bypass patients which over time can result in bone calcium depletion leading to osteopenia). The product addresses pre and post-operative nutritional deficiencies by aiding mineral absorption (via prebiotic inclusion), improvement of GI function/bowel health and supports weight loss pre and post surgery due to the product contributing only 27% of total energy requirements of a low calorie diet (recommended calorie intake around 1200 kcal/day). The product has a satiety inducing effect, a low glycemic index and avoids dumping syndrome.

The compositions according to the invention comprise 20-60 wt% protein source, 15 -55wt% low glycemic carbohydrate, 10-20 wt% soluble dietary fibers, less than 10 wt% fat and micronutrients, wherein the micronutrients comprise per 100 dry weight product; Iron 12.5 -100 mg, 175 -560 mcg vitamin B12, 0.75 - 3 g calcium, 10-100 mcg vitamin D, and 0.5 - 1.8 g phosphorus preferably with a Ca:P ratio of 1.4., wherein the wt% is based on the dry weight of the total composition and "mcg" stands for micrograms. The amount of phosphorus may be 0.5-1.5 wt%. Alternatively or additionally the amount of vitamin B12 may be 175-500 mcg.

### Protein source:

The levels of protein are between 20 -60 g per 100 g powder (i.e. 20-60wt%) and are intended to provide from 20 - 40g protein in total per day, the remainder being provided from the diet. Daily requirements are 60-70g per day for bariatric patients. A low lactose or lactose free protein source is preferred due to the lactose intolerance experienced post surgery.

In a preferred embodiment the protein is in the form of a hydrolysate. Protein hydrolysates (sources of peptides) are widely used in situations where there is difficulty digesting or absorbing whole protein within the gut. Small peptides are absorbed whole across the intestinal wall via carrier mediated transport systems. Once absorbed, they are hydrolysed by peptidases. The resulting free amino acids then enter the portal circulation. Thus including a protein hydrolysate will offer potential benefit in that the protein source will be easily and readily absorbed. Whole protein, preferably whey based as it is more easily digested than casein, may however be used as part or whole of the protein source if improved taste is required. Protein also has a mild satiety inducing effect. Thus another potential benefit of including significant amounts of protein in the composition is in its satiety inducing effects.

### Carbohydrate & Fiber:

As the product according to the invention is designed to have low calorie density between 15-55 g carbohydrates is used per 100 g powder and is intended to provide a maximum of 55 g carbohydrates per day. An important consideration with GBP patients is the possibility of dumping syndrome which occurs when sugars move too quickly through the stomach and intestines. Dumping syndrome causes nausea, weakness, sweating, faintness and possibly diarrhoea soon after eating. It is preferred that the product has an overall low glycemic index to ensure a slow release of glucose into the blood stream.

Consuming a low GI product has a positive effect on overall glycemic control in obese diabetic patients and in conjunction with weight loss will result in patients reducing or completely stopping their diabetic medications. It is preferred that the overall glycemic index is medium (36-50), and ideally low GI (<36). Therefore, the compositions according to the invention are particularly suitable for improving the glycemic control of obese diabetic patients pre and post bariatric surgery, while at the same time weight loss associated nutritional deficiencies can be prevented or restored.

The composition comprises low glycemic index carbohydrates, i.e. carbohydrates that have a glycemic index (GI) below 50. Preferably these carbohydrates comprise Fructose (19), Galactose (23), Isomaltulose (33), and/or slow digestible starches, such as maize starch. Alternatively the glycemic index of the composition can be reduced by inhibiting the digestive enzyme alpha-amylase which is responsible for the digestion of complex carbohydrates. Slowing this digestive process lowers the Glycemic Index (GI) of maltodextrin and/or starch containing foods. The use of these low GI carbohydrates will result in improved glycemic control pre and post bariatric surgery.

One key benefit of dietary fibers is their ability to increase mineral absorption, particularly calcium. The inventors found that this benefit is especially desirable in obese individuals who are more at risk of suffering osteoarthritis, osteoporosis and weak bones in later life and in patients following GBP surgery who may be at risk of bone demineralization due to vitamin D and calcium deficiencies.

Powdered compositions in accordance with the invention may be diluted to provide a drink or a mousse. One of the proposed benefits of the product for patients following gastric bypass surgery is inclusion of non-nutritive ingredients that induce feelings of satiety and thus prevent a patient consuming a larger portion of food than required. A number of possible ingredients have been reported to have potential benefit in this area such as guar gum, pectin or mucilages by delaying gastric emptying through their gel-forming effects. A traditional thickening ingredient such as these would not be ideal however for a small volume product such as this and the inventors found that the use of soluble dietary fibres such as prebiotics are considered to represent the most promising option. Preferably the volume is as small as possible, but at least less than 150 ml since such small volume is optimally acceptable by the post surgery patient.

Dietary fibers as used in this invention are typically resistant to digestion and absorption in the human small intestine with preferably a complete or partial fermentation in the large intestine. Preferably the present composition comprises at least one dietary fibre capable of stimulating the growth of bifodobacteria in the gut selected from the group consisting of galactooligosaccharides including trans galactooligosaccharides, inulin, fructooligosaccharides, xylooligosaccharides, palatinoseoligosaccharide, resistant starch, lactulose, lactosucrose, mannanoligosaccharides, isomaltooligosaccharides, maltooligosaccharides, glucomannan, arabinogalactan, soybean oligosaccharide, gentiooligosaccharide, pectin, pectate, chondroitine, hyaluronic acids, heparine, heparane, bacterial carbohydrates, sialoglycans, fucooligosaccharides, xanthan gum, polydextrose (PDX), galactomannans, preferably guar gum, arabinoxylan, preferably MGN-3 Rice Bran Arabinoxylan according to US Patent: 5,560,914, xyloglycan, callose, and/or degradation products thereof. All of these have beneficial prebiotic and bifidogenic effects in the intestinal system. PDX is a non-digestible carbohydrate that has been synthesized from randomly cross-linked glucose and sorbitol.

The inventors found that a combination of fructooligosaccharides and inulin result in longer-lasting feelings of satiety as these ingredients are fermented throughout the colon. These dietary fibres have greater relevance longer term as a patient adapts and becomes able to ingest larger quantities of food which may lead to unwanted weight gain.

In addition to a role in satiety induction it is well reported that dietary fibres are important for development of good colonic microflora with stimulation of gastrointestinal health via increasing the body's natural resistance to invading pathogens. Therefore a preferred use of the compositions according to the present invention, comprising dietary fibres, are particularly useful in stimulating the natural resistance to invading pathogens in obese bariatric surgery patients.

Increased blood cholesterol is a major problem in obese bariatric surgery patients. Part of the dietary treatment of these patients is related to the lowering of the blood cholesterol levels. A primary benefit of including dietary fibre is its effect on lowering blood cholesterol levels which has been demonstrated by several studies [4;5].

A preferred embodiment according to the invention comprises the Orafti^{™} Synergy 1 prebiotic which is an oligofructose enriched inulin, this contains a combination of short and long chain oligosaccharides. Combinations of the two fractions are physiologically more efficacious than the individual components. Whilst there has been no Tolerable Upper Intake Level (UL) set for dietary fibre intakes, distress (e.g. diarrhoea, flatulence, bloating and cramping) may be expected with intakes above 15-18g/day of inulin. Therefore in the patient group for which this product is designed, who have undergone bariatric surgery and will have limited daily intakes it is preferred to incorporate levels of between 5 - 25g/day of the Orafti^{™} Synergy 1. These levels will be well-tolerated by this patient group as has been reported in previous studies in patients with lower GI conditions such as ulcerative colitis or colon cancer.

### Fat:

There is no requirement in this patient group to include an additional fat source. Fats are discouraged in this group as they can significantly increase the calorie content of the diet. Thus inclusion of fats will also increase the calorie content of the proposed supplement. The aim is to produce a supplement that is very low in calories with levels that are between 0 and 10g/100g, preferably between 0 and 5g/100g powder. Fat is sometimes required to optimise taste and acceptability of the product. If a fat source is used, a preferred blend comprises hybrid safflower oil, canola oil and coconut oil. Such blend will provide a sufficient amount of α-linolenic acid (ALA) which is subsequently converted by the liver into eicosapentanoic acid (EPA). Preferably an optimal ratio of linoleic (LA) to α-linolenic acid (ALA)is provided wherein the level of LA provided is 1.8g/day, preferably between 1.3 and 2.7g day. Preferably the level of ALA provided is 0.45g/day, preferably between 0.27-0.67 g day. These would preferably be included in a ratio of LA:ALA of 4:1 to 10:1.

Alternatively a fat blend can be used comprising eicosapentanoic acid (EPA) wherein at least 0.1 gram EPA is provided per 100 g dry weight, preferably providing between 0.1 and 0.5 g EPA per 100g dry weight.

### Micronutrients:

The composition contains levels of the micronutrients iron, calcium, phosphorus, vitamin D, E and B₁₂ to meet specific requirements of patients following bariatric surgery. The rationale for these is described in detail below. The remainder of the vitamins, trace elements and magnesium will be provided at levels that will meet US RDAs up to 150%, as it is suggested that all patients take a prenatal multivitamin supplement (containing increased iron and other micronutrients) as a prophylactic measure regardless of whether they have identified deficiencies or not. The levels of the electrolytes sodium, potassium and chloride will be at levels inherent in the ingredients used.

### Iron:

Iron deficiency appears to be quite common following bariatric surgery. Incidences of deficiency ranging from 14-52% have been reported. In order to be absorbed, dietary non-haem ironrequires gastric acid to reduce the ferric ion to the ferrous state. As a result of bariatric surgery, the amount of gastric acid is greatly reduced thereby limiting absorption of iron from food. Iron is also absorbed in the duodenum (which is totally bypassed) and proximal jejunum (some of which is bypassed in the surgery). In menstruating women this deficiency is further exacerbated. The composition in accordance with the invention comprises 12.5-100mg per 100g dry weight product or iron, preferably between 12.5 and 75mg/100g, intended to provide a daily dose of from 12.5 - 60mg. In a preferred embodiment the proposed level of iron is just below the US upper limit of 45mg per day. In another preferred embodiment fat coated iron will be used. This has the advantage that the taste of the composition will be significantly improved.

### Vitamin B12:

In normal, healthy individuals, gastric acid and peptic acid are required to release vitamin B12 from food. In the duodenum, the vitamin then binds to intrinsic factor, which is then absorbed in the terminal ileum. Post bariatric surgery, gastric acid is virtually absent as the acid secreting cells are mostly located in the fundus of the stomach, which is bypassed, making it difficult for patients to effectively release Vitamin B12 bound in food. Good sources of this vitamin are primarily red meats and dairy products that may be excluded or limited from the diets of this patient group due to intolerances, making it even more difficult to meet requirements. It has been described in literature that there is frequently a lack of symptoms which may lead to delayed diagnosis of a condition which results in irreversible neurological damage if deficiency is maintained for a long period of time.

The composition according to the invention comprises vitamin B12 in an amount of 175-560mcg per 100 g (more preferably 175-500mcg/100g) to match the minimal level of 150mcg daily. Since the patients have problems with vitamin B12 absorption it is preferred to go for higher levels of this vitamin in order to maximise availability of the vitamin as total absorption increases with increasing intake. A preferred embodiment therefore comprises vitamin B12 in an amount of 250 to 500 mcg/100g product, even more preferably 275 to 500 mcg/100g product resulting in a daily dose of at least 250 mcg.

### Calcium, Vitamin D and Phosphorus:

Abnormal levels of calcium and vitamin D have been reported pre-surgery. It is postulated that this is possibly due to reduced exercise, decreased sunlight exposure and increased storage in body fat with resultant decreased bioavailability.

Calcium deficiency is predictable in this patient group as calcium in food is mostly absorbed in the duodenum and proximal jejunum, which is bypassed in RYGBP, via an inactive, saturable process mediated by Vitamin D. Stomach acid is also required to convert calcium in food to a soluble form for absorption. Decreased intakes of dairy products due to intolerance, secondary to lactase deficiency or previously masked intolerance will also lead to reduced calcium intakes post surgery. The inventors found that all patients should be supplemented with levels at least equal to or exceeding the RDA. A preferred embodiment therefore comprises between 1200-1500mg calcium as daily dose.

Preferred levels of calcium in the product according to the invention will be at least 1000mg per 100g (i.e. 1 wt%) providing at least 1000 mg calcium per day. Even more preferably the composition contains between 1200 - 3000mg calcium/100g providing at least 1500mg per day. Without being bound by theory the inventors expect that these higher levels of calcium will allow optimal absorption of calcium in this patient group. To increase bioavailability, calcium in the form of a citrate or gluconate will be used.

Several retrospective studies have shown a deficiency of vitamin D following gastric bypass surgery. Calcium can also be absorbed in the alkaline environment of the small intestine through a vitamin D dependent mechanism. The range of vitamin D per 100 g is between 10-100mcg, preferably between 10-30 mcg (more preferably 10-20 mcg) giving a daily intake of at least 10mcg. In a preferred embodiment vitamin D₃ is used since this form is more effective than D₂ at increasing levels of vitamin D hormone in circulation. These higher levels help to optimise calcium absorption.

The proposed levels of phosphorus will be from 500 to 1800mg per 100g (i.e. 0.5-1.8 wt%), more preferably 500 to 1500mg per 100g (i.e. 0.5-1.5 wt%). These levels are well below the US upper limit of 4000mg. In order to maximise bone health it is prudent to maintain a Ca:P ratio of 1.4 as per RDAs.

### Vitamin C and vitamin E:

Preferred vitamin C levels are between 50-2000mg per 100g product. 90mg per day is the RDA for 19-50 year old males whose requirements are slightly higher than females. Any excess vitamin is readily excreted by the body, and the upper limit for vitamin C is 2000mg per day.

Preferred levels of vitamin E are between 20-1000mg tocopherol equivalents per 100g product. This will provide a total daily intake of at least 40mg. US RDAs are in the range of 15-19mg per day and the US upper limit is 1000mg per day. In the absence of definitive evidence of vitamin E deficiencies post RYGBP, the aim is to provide levels that at least meet recommended intakes and will also act to reduce oxidative stress as previously mentioned.

These increased levels of vitamin C & E are incorporated due to increased iron intakes in this product, the aim is to provide levels that at least meet recommended intakes and will also act to reduce oxidative stress. Vitamin C is known to aid absorption of non-haeme iron. Cook and Monsen [9] found that the increase in iron absorption was directly proportional to the amount of vitamin C added: The ICMR Bulletin report (2000) recommends that in order to reduce oxidative stress in humans, daily administration of therapeutic doses of iron must be accompanied by supplementation with a combination of ascorbic acid and vitamin E.

### Energy Density:

Total calories have been kept to a minimum. Each composition preferably contains less than 500 kcal per 100g, even more preferably between 200 and 400 kcal per 100g.

### Packaging

### Powder formulation

The composition of the invention may be supplied as a powder to a patient. The powder may then be reconstituted with water. Sufficient water may be added to produce a low volume drink or less water may be added to obtain a mousse - like consistency.

By way of example, the powder may be supplied as a (one dose) sachet containing about 45.3g of powder. 80ml of water may be used to reconstitute into a low volume drink. Less water (20-30ml) can be added to obtain a mousse like consistency. The powder may be designed so that it can be made up either as a "pudding" or a "drink".

### Liquid formulation

Alternatively the powder may be reconstituted by the manufacturer and supplied to the patient as a "ready to drink" formula. Since bariatric surgery patients have a small stomach volume, it is essential that the volume is kept low. Preferably the volume of a single dose should not exceed 150 ml, more preferably no more than 100 ml and even more preferably less than 50 ml. The inventors expect that if the volume would exceed the maximum volume of 150 ml, the bariatric surgery patients will not be able to comply with the product intake required for obtaining the claimed effects of the product.

### Uses of the compositions

The composition may be used to improve several symptoms in bariatric surgery patients. Examples of the symptoms are obesity, osteopenia, dumping syndrome and nutritional deficiencies.

The compositions according to the invention can preferably be used in a method for
a. inducing liver size reduction when used pre-operatively,
b. prevention and treatment of post-operative nutritional deficiencies
c. preventing dumping syndrome
d. induction of weight loss pre and post surgery
in obese gastric bypass patients, wherein the method comprises the administration of a composition comprising 20-60 wt% protein source, 15 -55wt% carbohydrate, 10-20 wt% soluble dietary fibres, less than 10 wt% fat and micronutrients, wherein the micronutrients comprise Iron 12.5 -100 mg/100g, 0.175 - 0.560 mcg vitamin B12, 0.75 - 3 wt% calcium, 0.000010 - 0.000100 wt% (10-100 mcg/100g) vitamin D, and 0.5 -1.8 wt% phosphorus wherein the wt% is based on the dry weight of the total composition. The amount of phosphorus may be 0.5-1.5 wt%. Alternatively or additionally the amount of vitamin B12 may be 175-500 mcg.

**Osteopenia** refers to bone mineral density (BMD) that is lower than normal peak BMD but not low enough to be classified as osteoporosis. Bone mineral density is a measurement of the level of minerals in the bones, which indicates how dense and strong they are. If your BMD is low compared to normal peak BMD, you are said to have osteopenia. Having osteopenia means there is a greater risk that, as time passes, you may develop BMD that is very low compared to normal, known as osteoporosis. Patients that are obese and undergo bariatric surgery are at increased risk to develop Osteopenia and osteoporosis. The compositions according to the invention are particularly suitable to prevent and/or treat osteopenia and osteoporosis in these patients because they comprise relatively high amounts of calcium, phosphorus and vitamin D.

**Dumping syndrome** is most common in patients with certain types of stomach surgery, such as a gastrectomy or gastric bypass surgery that allow the stomach to empty rapidly. Gastric dumping syndrome, or rapid gastric emptying, happens when the lower end of the small intestine, the jejunum, fills too quickly with undigested food from the stomach. "Early" dumping begins during or right after a meal. Symptoms of early dumping include nausea, vomiting, bloating, cramping, diarrhea, dizziness and fatigue. "Late" dumping happens 1 to 3 hours after eating. Symptoms of late dumping include weakness, sweating, and dizziness. Many people have both types. In addition, people with this syndrome often suffer from low blood sugar, or hypoglycemia, because the rapid "dumping" of food triggers the pancreas to release excessive amounts of insulin into the bloodstream. This type of hypoglycemia is referred to as "alimentary hypoglycemia". The compositions according to the invention are particularly suitable for the treatment and/or prevention of dumping syndrome since the high protein levels and fibers in the product will decrease the rate of gastric emptying and the low glycemic carbohydrates will decrease the raise in glucose levels, i.e. the rate of absorption of glucose in the blood.

**Obesity** is the main reason for performing bariatric surgery. Before the start of the operation it may be needed to induce weight loss and after a successful operation it may be necessary to induce satiety in combination with the provision of sufficient essential vitamins and minerals. In a preferred embodiment, the composition according to the invention can be used for the treatment of weight loss-related symptoms in bariatric surgery patients.

### Example 1 (not part of the invention)

The Example describes a preferred nutritional composition in the form of a powder for the treatment of bariatric surgery patients

| | **Nutrient** | **Content** |
|---|---|---|
| Protein | Whey Based Low Lactose Protein ¹ | 30g |
| Carbohydrate | Maltodextrin/Modified Starch ² | 29g |
| Prebiotic | Synergy 1 ³ | 10g |
| Fat | Safflower Oil/Canola/Cocunut Oil Blend (1:1:0.1) | 5g |
| Calories | | 320Kcal |
| Iron | | 25mg |
| Vitamin B12 | | 350mcg |
| Calcium | | 1500mg |
| Vitamin D | | 25 mcg |
| Phosphorus | | 1070mg |
| Vitamin E | | 40mgTE |
| Vitamin C | | 180mg |
| Other vitamins, minerals and trace elements to meet 150% RDA and Flavouring | | To 90.6g |

| | | |
|---|---|---|
| ¹ Lactose content ca 0.25% ² MD:MS ca 3.3:1 ³ Ex Orafti (ca 50% short chain oligofructose and 50% long chain inulin) | | |

As indicated the total weight of the composition is 90.6g. This represents the amount oto be administered per day to the patient. The product would be packaged as two sachets each containing 45.3g of the formulation. Each sachet would be mixed with water to give a liquid product having a volume of 125-135 ml. The patient would receive two of these liquid products per day.

### References

1. Xanthakos SA, Inge TH. Nutritional consequences of bariatric surgery. Curr Opin Clin Nutr Metab Care 2006; 9:489-96.
2. Malinowski SS. Nutritional and metabolic complications of bariatric surgery. Am J Med Sci 2006; 331:219-25.
3. Parkes E. Nutritional management of patients after bariatric surgery. Am J Med Sci 2006; 331:207-13.
4. Jackson KG, Taylor GR, Clohessy AM, Williams CM. The effect of the daily intake of inulin on fasting lipid, insulin and glucose concentrations in middle-aged men and women. Br J Nutr 1999; 82:23-30.
5. Brighenti F, Casiraghi MC, Canzi E, Ferrari A. Effect of consumption of a ready-to-eat breakfast cereal containing inulin on the intestinal milieu and blood lipids in healthy male volunteers. Eur J Clin Nutr 1999; 53:726-33.
6. Langlands SJ, Hopkins MJ, Coleman N, Cummings JH. Prebiotic carbohydrates modify the mucosa associated microflora of the human large bowel. Gut 2004; 53:1610-6.
7. Davidson MH, Maki KC. Effects of dietary inulin on serum lipids. J Nutr 1999; 129:1474S-7S.
8. Pedersen A, Sandstrom B, Van Amelsvoort JM. The effect of ingestion of inulin on blood lipids and gastrointestinal symptoms in healthy females. Br J Nutr 1997; 78:215-22.
9. Cook JD, Monsen ER. Vitamin C, the common cold, and iron absorption. Am J Clin Nutr 1977; 30:235-41.

## Claims

1. Composition comprising 20-60 wt% protein source, 15 -55wt% low glycemic carbohydrate, 10-20 wt% soluble dietary fibres, less than 10 wt% fat and micronutrients, wherein the micronutrients comprise
0.75-3 wt% (preferably 1.2-3 wt%) calcium ,
0.5-1.8 wt% (preferably 0.5-1.5 wt%) phosphorus,
12.5-100 mg/100g of iron (preferably fat coated),
10-100 mcg/100g vitamin D,and
175-560 mcg/100g (preferably 175-500 mcg/100g) vitamin B12
the wt% being based on the dry weight of the total composition.

2. Composition according to claim 1 wherein the carbohydrate comprises at least one selected from the group low glycemic carbohydrates consisting of fructose, galactose, isomaltulose and slow digestible starch.

3. Composition according to claim 1 or 2 wherein the protein source is a low lactose or lactose free, protein source, said composition preferably comprising 20-60 wt%, more preferably 20-40 wt%, of the low lactose or lactose free protein source.

4. Composition according to any of the previous claims wherein the soluble dietary fibres comprise at least inulin and/or fructooligosaccharide.

5. Composition according to any of the previous claims wherein the fat comprises a blend of hybrid safflower oil, canola oil and coconut oil.

6. Composition according to any one of the previous claims wherein the amount of vitamin D is 10-30mcg /100g, preferably 10-20mcg/100g, dry weight of the composition.

7. Composition according to any of the previous claims wherein vitamin D consists essentially of vitamin D3.

8. Composition according to any one of the previous claims containing from 12.5 to 75mg/100g of iron.

9. Composition according to any of the previous containing 250 to 500 mcg/100g of vitamin B12.

10. Composition according to any one of the previous claims wherein the ratio of calcium: phosphorus (Ca:P) is 1.4.

11. Composition comprising 20-60 wt% protein source, 15 -55 wt% low glycemic carbohydrate, 10-20 wt% soluble dietary fibres, less than 10 wt% fat and micronutrients, wherein the micronutrients comprise
0,75-3 wt% (preferably 1.2-3 wt%) calcium
0.5-1.8 wt% (preferably 0.5-1.5 wt%) phosphorus,
12.5-100 mg/100g of iron (preferably fat coated),
10-100 mcg/100 vitamin D, and
175-560 mcg/100g (preferably 175-500 mcg/100g) vitamin B12
the wt% being based on the dry weight of the total composition, for use in:
a. inducing liver size reduction pre-operatively in bariatric surgery patients,
b. prevention and/or treatment of bone calcium depletion and osteopenia in bariatric surgery patients,
c. prevention and treatment of post-operative nutritional deficiencies in bariatric surgery patients,
d. improve GI function or bowel health in bariatric surgery patients,
e. induction of weight loss pre and post bariatric surgery ,
f. inducing satiety in bariatric surgery patients, or
g. preventing dumping syndrome in bariatric surgery patients
h. maintaining glycaemic control in obese gastric bypass surgery patients.

## Patentansprüche

1. Zusammensetzung umfassend 20 - 60 Gew.-% Proteinquelle, 15 - 55 Gew.-% Kohlehydrat von niedrigem glykämischem Index, 10 - 20 Gew.-% lösliche Ballaststoffe, weniger als 10 Gew.-% Fett und Mikronährstoffe, wobei die Mikronährstoffe Folgendes umfassen
0,75 - 3 Gew.-% (bevorzugt 1,2 - 3 Gew.-%) Calcium,
0,5 - 1,8 Gew.-% (bevorzugt 0,5 - 1,5 Gew.-%) Phosphor,
12,5 - 100 mg/100 g Eisen (bevorzugt fettbeschichtet),
10 - 100 mcg/100 g Vitamin D und
175 - 560 mcg/100 g (bevorzugt 175 - 500 mcg/100 g) Vitamin B12
wobei die Gew.-% auf das Trockengewicht der gesamten Zusammensetzung bezogen sind.

2. Zusammensetzung nach Anspruch 1, wobei das Kohlehydrat mindestens eines umfasst ausgewählt aus der Gruppe bestehend aus Kohlehydraten von niedrigem glykämischem Index bestehend aus Fructose, Galactose, Isomaltulose und langsam verdaulicher Stärke.

3. Zusammensetzung nach Anspruch 1 oder 2, wobei die Proteinquelle eine lactosefreie Proteinquelle oder eine von geringem Lactosegehalt ist, wobei die Zusammensetzung bevorzugt 20 - 60 Gew.-%, noch bevorzugter 20 - 40 Gew.-% der lactosefreien Proteinquelle oder einer von geringem Lactosegehalt umfasst.

4. Zusammensetzung nach einem der vorhergehenden Ansprüche, wobei die löslichen Ballaststoffe mindestens Inulin und/oder Fructooliosacchand umfassen.

5. Zusammensetzung nach einem der vorhergehenden Ansprüche, wobei das Fett eine Mischung von Öl hybrider Färberdistel, Rapsöl und Kokosnussöl umfasst.

6. Zusammensetzung nach einem der vorhergehenden Ansprüche, wobei die Menge an Vitamin D 10 - 30 mcg/100 g, bevorzugt 10 - 20 mcg/100 g, auf das Trockengewicht der Zusammensetzung bezogen, beträgt.

7. Zusammensetzung nach einem der vorhergehenden Ansprüche, wobei das Vitamin D im Wesentlichen aus Vitamin D3 besteht.

8. Zusammensetzung nach einem der vorhergehenden Ansprüche, die 12,5 bis 75 mg Eisen /100 g enthält.

9. Zusammensetzung nach einem der vorhergehenden Ansprüche, die 250 bis 500 mcg Vitamin B12/100 g enthält.

10. Zusammensetzung nach einem der vorhergehenden Ansprüche, wobei das Verhältnis von Calcium:Phosphor (Ca:P) 1,4 beträgt.

11. Zusammensetzung umfassend 20 - 60 Gew.-% Proteinquelle, 15 - 55 Gew.-% Kohlehydrat von niedrigem glykämischem Index, 10 - 20 Gew.-% lösliche Ballaststoffe, weniger als 10 Gew.-% Fett und Mikronährstoffe, wobei die Mikronährstoffe Folgendes umfassen
0,75 - 3 Gew.-% (bevorzugt 1,2 - 3 Gew.-%) Calcium,
0,5 - 1,8 Gew.-% (bevorzugt 0,5 - 1,5 Gew.-%) Phosphor,
12,5 - 100 mg/100 g Eisen (bevorzugt fettbeschichtet),
10 - 100 mcg/100 g Vitamin D und
175 - 560 mcg/100 g (bevorzugt 175 - 500 mcg/100 g) Vitamin B12
wobei die Gew.-% auf das Trockengewicht der gesamten Zusammensetzung bezogen sind,
zur Verwendung zum:
a. Induzieren der Reduktion der Lebergröße vor einer Operation bei Adipositaschirurgiepatienten,
b. Verhindern und/oder Behandeln von Knochencalciumarmut und Osteopenie bei Adipositaschirurgiepatienten,
c. Verhindern und/oder Behandeln postoperativer Ernährungsmängel bei Adipositaschirurgiepatienten,
d. Verbessern der GI-Funktion oder Darmgesundheit bei Adipositaschirurgiepatienten,
e. Herbeiführen von Gewichtsverlust vor und nach Adipositaschirurgie,
f. Herbeiführen von Sattheit bei Adipositaschirurgiepatienten oder
g. Verhindern des Dumping-Syndroms bei Adipositaschirurgiepatienten,
h. Aufrechterhalten der glykämischen Kontrolle bei fettleibigen Magen-Bypass-Operationspatienten.

## Revendications

1. Composition comprenant 20 à 60 % en pds d'une source de protéine, 15 à 55 % en pds d'hydrate de carbone à faible indice glycémique, 10 à 20 % en pds de fibres alimentaires solubles, moins de 10 % en pds de matière grasse et d'oligo-éléments, dans laquelle les oligo-éléments comprennent
0,75 à 3 % en pds (de préférence 1,2 à 3 % en pds) de calcium,
0,5 à 1,8 % en pds (de préférence 0,5 à 1,5 % en pds) de phosphore,
12,5 à 100 mg/100 g de fer (de préférence enrobé de matière grasse),
10 à 100 mcg/100 g de vitamine D, et
175 à 560 mcg/100g (de préférence 175 à 500 mcg/100 g) de vitamine B12
le % en pds étant basé sur le poids sec de la composition totale.

2. Composition selon la revendication 1, dans laquelle l'hydrate de carbone comprend au moins un élément sélectionné parmi le groupe des hydrates de carbone à faible indice glycémique constitués du fructose, du galactose, de l'isomaltulose et de l'amidon à digestion lente.

3. Composition selon la revendication 1 ou 2, dans laquelle la source de protéine est une source de protéine à faible teneur en lactose ou sans lactose, ladite composition comprenant de préférence 20 à 60 % en pds, plus préférablement 20 à 40 % en pds, de la source de protéine à faible teneur en lactose ou sans lactose.

4. Composition selon l'une quelconque des revendications précédentes, dans laquelle les fibres alimentaires solubles comprennent au moins de l'inuline et/ou un fructooligosaccharide.

5. Composition selon l'une quelconque des revendications précédentes, dans laquelle la matière grasse comprend un mélange d'huile de carthame hybride, d'huile de canola et d'huile de coco.

6. Composition selon l'une quelconque des revendications précédentes, dans laquelle la quantité de vitamine D est de 10 à 30 mcg/100 g, de préférence 10 à 20 mcg/100 g, sur poids sec de la composition.

7. Composition selon l'une quelconque des revendications précédentes, dans laquelle la vitamine D est essentiellement constituée de vitamine D3.

8. Composition selon l'une quelconque des revendications précédentes, contenant de 12,5 à 75 mg/100 g de fer.

9. Composition selon l'une quelconque des revendications précédentes, contenant 250 à 500 mcg/100 g de vitamine B12.

10. Composition selon l'une quelconque des revendications précédentes, dans laquelle le rapport du calcium:phosphore (Ca:P) est de 1,4.

11. Composition comprenant 20 à 60 % en pds de source de protéine, 15 à 55 % en pds d'hydrate de carbone à faible indice glycémique, 10 à 20 % en pds de fibres alimentaires solubles, moins de 10 % en pds de matière grasse et d'oligo-éléments, dans laquelle les oligo-éléments comprennent
0,75 à 3 % en pds (de préférence 1,2 à 3 % en pds) de calcium
0,5 à 1,8 % en pds (de préférence 0,5 à 1,5 % en pds) de phosphore,
12,5 à 100 mg/100 g de fer (de préférence enrobé de matière grasse),
10 à 100 mcg/100 de vitamine D, et
175 à 560 mcg/100 g (de préférence 175 à 500 mcg/100 g) de vitamine B12
le % en pds étant basé sur le poids sec de la composition totale, pour l'utilisation dans:
a. l'induction de la réduction de la taille du foie de manière pré-opérationnelle chez les patients en chirurgie baryatrique,
b. la prévention et/ou traitement de la décalcification osseuse et l'ostéopénie chez les patients en chirurgie baryatrique,
c. la prévention et le traitement des insuffisances nutritionnelles postopératoires chez les patients en chirurgie baryatrique,
d. l'amélioration de la fonction GI ou de la santé intestinale chez les patients en chirurgie baryatrique,
e. l'induction de la perte de poids pré et post-chirurgie baryatrique,
f. l'induction de la satiété chez les patients en chirurgie baryatrique, ou
g. la prévention du syndrome de chasse chez les patients en chirurgie baryatrique
h. le maintien de la régulation de la glycémie chez les patients obèses en chirurgie de pontage gastrique.
